Europäisches Patentamt

(19) European Patent Office

Office européen des brevets

(11) Publication number : **0 339 431 B1**

(12) **EUROPEAN PATENT SPECIFICATION**

(45) Date of publication of patent specification :
20.03.91 Bulletin 91/12

(51) Int. Cl.⁵ : **F16D 27/10, F16D 27/14**

(21) Application number : 89106884.3

(22) Date of filing : 18.04.89

(54) Electromagnetic clutch.

(30) Priority : 22.04.88 JP 53592/88

(43) Date of publication of application :
02.11.89 Bulletin 89/44

(45) Publication of the grant of the patent :
20.03.91 Bulletin 91/12

(84) Designated Contracting States :
DE FR GB IT SE

(56) References cited :
EP-A- 239 401
GB-A- 1 245 988
US-A- 3 978 953
US-A- 4 122 930

(73) Proprietor : SANDEN CORPORATION
20 Kotobuki-cho
Isesaki-shi Gunma, 372 (JP)

(72) Inventor : Gonda, Hideyuki
12-10 Ote-machi
Isesaki-shi Gunma, 372 (JP)

(74) Representative : Prüfer, Lutz H., Dipl.-Phys.
Harthauser Strasse 25d
W-8000 München 90 (DE)

## Description

The present invention relates to an electromagnetic clutch according to the preamble of Claim 1. Clutches of that kind are for use in controlling the transmission of power from an automobile engine to a refrigerant compressor in an automobile air conditioning system, and more particularly, to an improved clutch rotor for transferring the rotation of a pulley to the compressor shaft. In EP-A-0239401 there is disclosed an electromagnetic clutch having the features of the preamble of Claim 1.

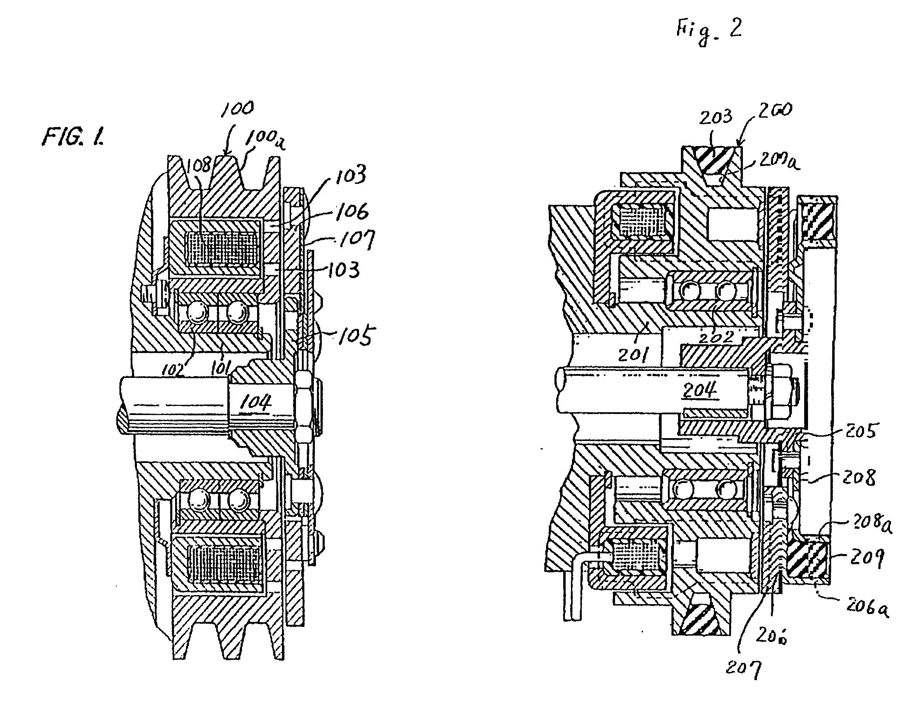

The general structure of an electromagnetic clutch for use between an automobile engine and refrigerant compressor is disclosed in U.S. Patent Nos. 3,044,594 and 3,082,933. The electromagnetic clutch disclosed in these patents, which is illustrated in Figure 1 of the annexed drawings, comprises a clutch rotor 100 having pulley portion 100a rotatably supported on a tubular extension 101 of a compressor housing through a bearing 102. Rotor 100 is rotated by a belt (not shown) coupled to the automobile engine. Rotor 100 is made of a magnetic material in which one or more concentric arcuate or annular slits 103 are formed to define a plurality of concentric annular magnetic pole pieces. Drive shaft 104 extends through the tubular extension 101 in the compressor housing and a hub 105 is fixed to the terminal end of drive shaft 104. An annular armature plate 106 is joined by a plurality of leaf springs 107 to hub 105 in such a fashion that armature plate 106 faces the annular concentric pole pieces with an axial air gap therebetween. A magnetic coil 108 is mounted on the tubular extension of the housing to generate magnetic flux to attract armature plate 106 to the magneetic pole pieces. Thus, when magnetic coil 108 is energized and the engine is driving rotor 100, drive shaft 104 rotates together with rotor 100. However, when magnetic coil 108 is not energized, even though rotor 100 is rotated by the engine, drive shaft 104 of the compressor is not driven.

In the above prior art construction, armature plate 106 is joined to hub 105 by a plurality of leaf springs 107 and hub 105 is fixed to drive shaft 104. At the moment when armature plate 106 is energized, it very quickly engages with rotor 100. Accordingly, drive shaft 104 receives a severe torsional stress. Furthermore, even though during an operation of a compressor, drive shaft 104 rotates with a torsional vibration due to being continuously produced the torsional stress. In result, drive shaft 104 may be subjected to unacceptable metallic fatigue.

To reduce above defect, U.S. Patent No. 3,774,739 discloses another type of the electromagnetic clutch as illustrated in Figure 2. In this prior art, the electromagnetic clutch comprises a clutch rotor 200 having pulley portion 200a rotatably supported on a tubular extension 201 of a compressor housing through a bearing 202. Rotor 200 made of a magnetic material is rotated by a belt 203 coupled to the automobile engine. A drive shaft 204 extends through tubular extension 201 in the compressor housing and a hub 205 fixed to the terminal end of drive shaft 204. A first holder plate 206 is fixed, such as rivets or other fastening elements, on the opposite axial end surface of an annular armature plate 207 than that which faces rotor 200. A second holder plate 208 is fixed, such as also by rivets or other fastening elements, on the opposite axial end surface of hub 205 than that which faces rotor 200. Both outer end portions of first and second holder plates 206 and 208 are formed with concentric annular axial flanges 206a and 208a, and a rubber member 209 is fixedly disposed in a clearance between axial flanges 206a and 208a by using a bonding agent. Therefore, armature plate 207 is connected to hub 205 through first holder plate 206, rubber member 209 and second holder plate 208. The transmission of sudden torque changes to drive shaft 204 and the torsional vibration of drive shaft 204 are eased by rubber member 209. The case of torsional impact by a rubber member is also known from EP-A-0239401.

However, easing of the impact force is dependant on including of not only rotational bending and/or sharing stress but also axial bending and/or sharing stress. Therefore, severe exfoliation may happen between rubber member 209 and an inner wall of both axial flanges 206a and 208a due to the adhesive strength being initially not so strong and/or the adhesive strength being reduced caused by an operation time of the electromagnetic clutch being long elapsed even if the adhesive strength is initially strong. Furthermore, rubber member 209 itself fatigues by the repeated intermittent operation of the clutch and the rubber member 209 becomes cracked or destroyed.

It is an object of this invention to provide an electromagnetic clutch which can reduce the torsional stress loading a drive shaft without decreasing durability of a torsional stress absorbing element. This object is achieved by the features of the characterising part of Claim 1.

The electromagnetic clutch includes a first rotatable member of magnetic material, such as a clutch rotor, and a second rotatable member, such as a drive shaft. An annular armature plate of magnetic material is joined to the second rotatable member so that the armature plate can axially move within a limited range. The armature plate faces an axial end surface of the first rotatable member with an axial air gap therebetween. An electromagnetic device is associated with the first rotatable member for attracting the armature plate to the axial end surface so that rotation of the first rotatable member can be transmitted to the second rotatable member through the armature plate by the operation of the electromagnetic device.

The first rotatable member comprises an annular main body, an annular pulley member and an annular elastic member, such as rubber member. The pulley member for receiving a rotational motion of an outer power source, such as an engine of an automobile, surrounds the main body. The elastic member is forcibly inserted in an annular gap between the main body and pulley member.

Figure 1 is a vertical sectional view of an electromagnetic clutch in accordance with one prior art.

Figure 2 is a vertical sectional view of an electromagnetic clutch in accordance with another prior art.

Figure 3 is a vertical sectional view of an electromagnetic clutch in accordance with one embodiment of the present invention.

Figure 4 is side view of the electromagnetic clutch shown in Figure 3.

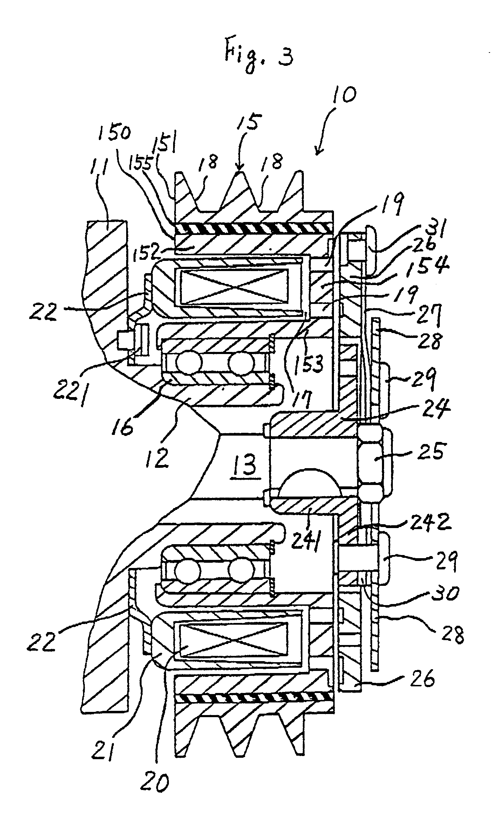

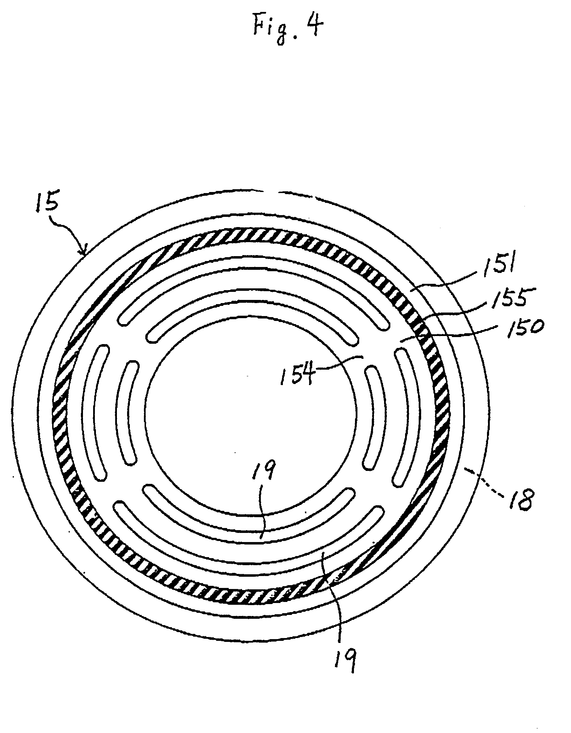

An electromagnetic clutch in accordance with one embodiment of the present invention is shown in Figures 3 and 4. With reference to Figure 3, electromagnetic clutch 10 is intended to be connected to a refrigerant compressor for an automobile air conditioning system. Compressor housing 11 is provided with a cantilevered tubular extension 12 surrounding an extension of drive shaft 13 of the compressor. Drive shaft 13 is rotatably supported in the compressor housing by bearings (not shown).

Clutch rotor 15 is rotatably supported on tubular extension 12 through bearing 16 which is mounted on the outer surface of tubular extension 12. The clutch rotor 15 comprises annular main body portion 150 and annular pulley member portion 151. Main body portion 150 is made of magnetic material, such as steel, and further comprises outer annular cylindrical portion 152, inner annular cylindrical portion 153 and axial end plate portion 154 connecting outer and inner cylindrical portions 152 and 153 at an axial forward end (right handside in Figure 3). Annular U-shaped cavity 17 is defined between the portions 152, 153 and 154 and a plurality of V-shaped grooves 18 are provided on the outer peripheral surface of annular pulley member portion 151 for receiving a belt (not shown) for coupling the compressor to the output of the automobile engine (not shown).

Axial end plate portion 154 includes one or more concentric slits 19 which are disposed on one or more concentric circles. These slits 19 define a plurality of annular or arcuate magnetic pieces with the surface of the poles being on the axial end plate portion 154.

Electromagnetic coil 20 is disposed in annular cavity 17 of main body portion 150. Coil 20 is contained within annular magnetic housing 21 having U-shaped cross section. Housing 21 is fixed to supporting plate 22, which is secured to the axial end surface of compressor housing 11 by a plurality of rivets 221. A small air gap is maintained between coil housing 21 and main body portion 150.

Hub 24 is disposed on a terminal end of drive shaft 13 within the housing. Hub 24 is secured to drive shaft 13 by nut 25. The hub 24 comprises tubular member 241 secured on the terminal end of drive shaft 13 and radial flange portion 242 extending radially outwardly from the axial end of tubular member 241. Radial flange portion 242 faces axial end plate portion 154 at a predetermined axial air gap. Flange portion 242 is formed integral with tubular member 241. Alternatively, the flange portion may be formed separately from the tubular member and fixed on the tubular member by, for example, welding.

Ring plate or armature plate 26, which is concentric with hub 24, is disposed in the axial gap between axial end plate portion 154 and radial flange portion 242. Armature plate 26, which faces the axial end plate portion 154 at a predetermined axial air gap, e.g., shown in Figure 3, is elastically connected to flange portion 242 of hub 24 through a plurality of leaf springs 27. Stopper plate 28 and one end of each leaf spring 27 are secured by rivet 29 to the outer surface of flange portion 242 through spacing member 30. Another end of each leaf spring 27 is fixed to armature plate 26 by rivet 31 to support armature plate 26 flexibly for axial movement upon deflection of spring 27.

With reference to Figure 4 additionally, clutch rotor 15 is radially and concentrically separated into two parts, such as annular main body portion 150 and annular pulley member portion 151, with a radial air gap. Rubber member 155 is forcibly inserted into the radial air gap to fixedly link both two portions 150 and 151.

With reference to Figure 3 again, an outer diameter of armature plate 26 is determined at least within an outer diameter of axial end plate portion 154 of main body portion 150, preferably is same, to avoid engaging with an axial end surface of pulley member portion 151. Accordingly, the torsional stress to drive shaft 13 is effectively absorbed by rubber member 155.

In operation, if coil 20 is not energized, armature plate 26 is separated from axial end plate portion 154 by the recoil strength of leaf springs 27 which maintain the predetermined air gap. Thus, when coil 20 is not energized, only clutch rotor 15 is driven by the engine of the automobile through the belt, and the compressor does not operate. On the other hand, when coil 20 is energized, magnetic flux is induced and flows through a closed loop comprising coil housing 21, clutch rotor 15, armature plate 26, and coil housing 21. Armature plate 26 is magnetically attracted to clutch rotor 15, precisely to main body portion 150, by the magnetic flux. Therefore, the rotating movement of the automobile engine is transmitted to drive shaft 13 of the compressor through clutch rotor 15, armature plate 26, leaf springs 27 and hub 24.

At the moment when armature plate 26 contacts axial end plate portion 154 of main body portion 150, only rubber member 155 receives a rotational bending and/or shearing stress caused by the torque of armature plate 26. This rotational stress is taken up by torsional deformation of rubber member 155. Thus, the torsional stress to drive shaft 13 is reduced without decreasing the durability of rubber member 155.

This invention has been described in detail in connection with preferred embodiment. It will be easily understood by those skilled in the art that other variations and modifications can be easily made within the scope of the invention, which is defined by the following claims.

## Claims

1. An electromagnetic clutch including a first rotatable member (15) of magnetic material, a second rotatable member (13, 24, 242), an annular armature plate (26) of magnetic material joined to said second rotatable member (13, 24, 242) so that said annular armature plate (26) is capable of limited axial movement, said annular armature plate (26) facing an axial end surface of said first rotatable member (15) with an axial gap therebetween, and an electromagnetic means (20) associated with said first rotatable member (15) for attracting said armature plate (26) to said axial end surface so that rotation of said first rotatable member (15) can be transmitted to said second rotatable member (13, 24, 242) through said armature plate (26) by the operation of said electromagnetic means (20), said first rotatable member (15) comprising an annular main body (150), an annular pulley member (151) and annularly surrounding said annular main body (150) receiving the rotational motion of an outer power source, and an elastic member (155) being provided to ease the impact torque on the second rotatable member (13, 24, 242) when the clutch is engaged, characterised in that said elastic member (155) is fixedly sandwiched between said annular main body (150) and said annular pulley member (151), said annular main body and said annular pulley member being two separate parts.

2. The electromagnetic clutch of claim 1, wherein said annular armature plate (26) is attracted to an axial end surface (154) of said annular main body (150).

3. The electromagnetic clutch of claim 1, wherein said elastic member (155) is forcibly inserted in an annular gap between said annular main body (150) and said annular pulley member (151).

4. The electromagnetic clutch of claim 1 and 3, wherein said elastic member (155) is made of rubber.

5. The electromagnetic clutch of claim 1, wherein the outer diameter of said armature plate (26) is equal or smaller than the outer diameter of said annular main body (150) of said first rotatable member (15).

## Ansprüche

1. Elektromagnetische Kupplung mit einem ersten drehbaren Teil (15) aus magnetischem Material, einem zweiten drehbaren Teil (13, 24, 242), einer mit dem zweiten drehbaren Teil (13, 24, 242) so verbundenen ringförmigen Ankerplatte (26) aus magnetischem Material, daß die ringförmige Ankerplatte (26) eine begrenzte axiale Bewegung ausführen kann, wobei die ringförmige Ankerplatte (26) einer axialen Endoberfläche des ersten drehbaren Teiles (15) gegenübersteht und eine axiale Lücke dazwischen gebildet ist, und einer mit dem ersten drehbaren Teil (15) verknüpften elektromagnetischen Einrichtung (20) zum Ziehen der Ankerplatte (26) zu der axialen Endoberfläche, so daß Rotation des ersten drehbaren Teiles (15) auf das zweite drehbare Teil (13, 24, 242) durch die Ankerplatte (26) durch die Tätigkeit der elektromagnetischen Einrichtung (20) übertragen werden kann, wobei das erste drehbare Teil (15) einen ringförmigen Hauptkörper (150), ein ringförmig den ringförmigen Hauptkörper (150) umgebendes und die Rotationsbewegung einer äußeren Kraftquelle aufnehmendes ringförmiges Scheibenteil (151) und ein zum Verringern des Stoßdrehmomentes auf das zweite drehbare Teil (13, 24, 242) beim Eingreifen der Kupplung vorgesehene elastische Teil (155) aufweist, dadurch gekennzeichnet, daß das elastische Teil (155) fest zwischen dem ringförmigen Hauptkörper (150) und dem ringförmigen Scheibenteil (151) eingeklemmt ist, wobei der ringförmige Hauptkörper und das ringförmige Scheibenteil zwei getrennte Teile sind.

2. Elektromagnetische Kupplung nach Anspruch 1, bei der die ringförmige Ankerplatte (26) zu einer axialen Endoberfläche (154) des ringförmigen Hauptkörpers (150) gezogen wird.

3. Elektromagnetische Kupplung nach Anspruch 1, bei der das elastische Teil (155) zwangsweise in eine ringförmige Lücke zwischen dem ringförmigen Hauptkörper (150) und dem ringförmigen Scheibenteil (151) eingeführt wird.

4. Elektromagnetische Kupplung nach Anspruch 1 und 3, bei der das elastische Teil (155) aus Gummi gemacht ist.

5. Elektromagnetische Kupplung nach Anspruch 1, bei der der äußere Durchmesser der Ankerplatte (26) gleich oder kleiner als der äußere Durchmesser des ringförmigen Hauptkörpers (150) des ersten drehbaren Teiles (15) ist.

## Revendications

1. Embrayage électromagnétique comprenant un premier élément capable de rotation (15) en matériau magnétique, un second élément capable de rotation (13, 24, 242), une plaque d'armature annulaire (26) en matériau magnétique raccordée audit second élément capable de rotation (13, 24, 242) de sorte que ladite plaque d'armature annulaire (26) est capable d'un déplacement axial limité, ladite plaque d'armature annulaire (26) faisant face à une surface d'extrémité axiale dudit premier élément capable de rotation (15) avec un espace axial entre eux, et un moyen électromagnétique (20) associé audit premier élément capable de rotation (15) pour attirer ladite plaque d'armature (26) vers ladite surface d'extrémité axiale de sorte que la rotation dudit premier élément capable de rotation (15) peut être transmise audit second élément capable de rotation (13, 24, 242) par l'intermédiaire de ladite plaque d'armature (26) par le fonctionnement dudit moyen électromagnétique (20), ledit premier élément capable de rotation (15) consistant en un corps principal annulaire (150), un élément formant poulie annulaire (151) entourant de manière annulaire ledit corps principal annulaire (150) et recevant le mouvement de rotation d'une source d'énergie extérieure, et un élément élastique (155) étant prévu pour amortir le moment de choc sur le second élément capable de rotation (13, 24, 242) lorsque l'embrayage est engagé, caractérisé en ce que ledit élément élastique (155) est intercalé de manière fixe entre ledit corps principal annulaire (150) et ledit élément formant poulie annulaire (151), ledit corps principal annulaire et ledit élément formant poulie annulaire étant deux pièces séparées.

2. Embrayage électromagnétique selon la revendication 1, caractérisé en ce que ladite plaque d'armature annulaire (26) est attirée vers une surface d'extrémité axiale (154) dudit corps principal annulaire (150).

3. Embrayage électromagnétique selon la revendication 1, caractérisé en ce que ledit élément élastique (155) est inséré en force dans un espace annulaire entre ledit corps principal annulaire (150) et ledit élément formant poulie annulaire (151).

4. Embrayage électromagnétique selon l'une des revendications 1 et 3, caractérisé en ce que ledit élément élastique (155) est fait de caoutchouc.

5. Embrayage électromagnétique selon la revendication 1, caractérisé en ce que le diamètre extérieur de ladite plaque d'armature (26) est égal ou inférieur au diamètre extérieur dudit corps principal annulaire (150) dudit premier élément capable de rotation (15).

Fig. 2

FIG. 1.

6

Fig. 3

Fig. 4